Europäisches Patentamt

European Patent Office

Office européen des brevets

(19)

(11) Veröffentlichungsnummer: **0 283 737**
**B1**

(12) # EUROPÄISCHE PATENTSCHRIFT

(45) Veröffentlichungstag der Patentschrift:
30.05.90

(51) Int. Cl.⁵: **B60R 21/00**

(21) Anmeldenummer: **88102586.0**

(22) Anmeldetag: **22.02.88**

(54) Schaltungsanordnung zum Betätigen eines Schutzsystems.

(30) Priorität: **26.03.87 DE 3709892**

(43) Veröffentlichungstag der Anmeldung:
**28.09.88 Patentblatt 88/39**

(45) Bekanntmachung des Hinweises auf die Patenterteilung:
**30.05.90 Patentblatt 90/22**

(84) Benannte Vertragsstaaten:
**AT DE ES FR GB IT SE**

(56) Entgegenhaltungen:
**EP-A- 0 011 680
DE-A- 2 302 680
DE-A- 2 302 715
DE-A- 2 813 457
US-A- 3 849 759
US-A- 3 851 305
US-A- 3 863 208
US-A- 4 059 822**

(73) Patentinhaber: **Siemens Aktiengesellschaft,
Wittelsbacherplatz 2, D-8000 München 2(DE)**

(72) Erfinder: **Swart, Marten, Ing. grad.,
Albrecht-Altdorfer-Ring 70, D-8407 Obertraubling(DE)**

## Beschreibung

Die Erfindung betrifft eine Schaltungsanordnung zum Betätigen eines Schtuzsystems gemäß Oberbegriff von Anspruch 1.

Eine solche Schaltungsanordnung, insbesondere für ein Kfz-Airbag-System, weist in der Regel eine gemeinsame Energiequelle auf, die die Zündenergie für Lastkreise mit elektrisch betätigten Auslösern für die einzelnen Airbags liefert. Die Betätigung erfolgt über zwei zueinander in Serie geschaltete Schalter, wobei der eine zwischen dem jeweiligen Auslöser und der Energiequelle und der andere zwischen Auslöser und Masse liegt. Diese beiden Schalter werden von zwei unabhängig voneinander wirkenden Verzögerungssensoren betätigt, so daß nur beim Ansprechen beider Verzögerungssensoren eine Auslösung des Airbag-Systems erfolgt. Durch die Anordnung vor und hinter dem jeweiligen Auslöser ist das sogenannte Zweifehlerkriterium gegeben. Eine Fehlauslösung ist danach nur dann möglich, wenn zwei Fehler gleichzeitig auftreten. Erst zwei Kurzschlüsse gegen die Versorgungsspannung und gegen Masse oder ein Kurzschluß und gleichzeitiges fehlerhaftes Ansprechen nur eines Verzögerungssensors führen zur Fehlauslösung. Eine solche Schaltungsanordnung ist z.B. in der EP-A 0 284 728 beschrieben, die jedoch nach dem Prioritätstag der vorliegenden Anmeldung veröffentlicht wurde.

Der elektrisch betätigte Auslöser für jeden Airbag ist gemeinsam mit diesem und weiteren mechanischen Bauteilen in einem Airbag-Gehäuse untergebracht. In dieses Airbag-Gehäuse führen eine elektrische Zu- und Ableitung für den Auslöser hinein, die mit den beiden Schaltern verbunden sind. Da diese Zu- und Ableitung jeweils eine gewisse Weglänge frei in dem Kraftfahrzeug verlegt werden muß, kann es auf diesen Leitungen zum Einstreuen hochfrequenter Störungen kommen. Dadurch entstehende, hohe kurzzeitig auftretende Spannungs- und Stromspitzen könnten zu einer Fehlauslösung des Auslösers führen. Aus diesem Grund ist in der Zu- und Ableitung beim Durchgang durch das Airbag-Gehäuse jeweils ein Durchführungskondensator vorgesehen, der einseitig mit der Gehäusemasse verbunden ist und damit hochfrequente Störungen gegen Masse ableitet.

Messungen mit allen möglichen Betriebs- und Fehlerbedingungen ergaben trotz Vorhandensein solcher Durchführungskondensatoren immer wieder Stromflüsse über den jeweiligen Auslöser, durch die er gestreßt werden kann. Solche Auslöser sind nämlich elektrisch betätigte, chemische Zündpillen mit einem chemischen Treibsatz, in dem durch jeden elektrischen Stromfluß chemische Reaktionen ausgelöst werden.

Die Erfindung beruht auf der Feststellung, daß ein solcher Stromfluß durch Schaltprellen des versorgungsspannungsseitigen Schalters zur Auslösung des Airbags verursacht wird. Ein solches Schaltprellen ist z.B. bei einer sehr harten Bremsung möglich. Dadurch wird jedoch noch nicht der Airbag ausgelöst, da dafür auch der zweite, masseseitige Schalter geschlossen sein müßte. Das Schaltprellen führt jedoch zu einer Aufladung der Durchführungskondensatoren vor und hinter dem Auslöser. Da die Durchführungskondensatoren in der Größenordnung von einem Nanofarad liegen, ist dieser Strom nicht groß genug, um den Auslöser zu betätigen.

Da die Durchführungskondensatoren aber andererseits selbst eine Schutzwirkung ausüben, kann auf sie nicht verzichtet werden.

Der Erfindung liegt deshalb die Aufgabe zugrunde, eine Schaltungsanordnung zum Betätigen eines Schutzsystems derart auszuführen, daß es im Bereitschaftsfall der Schaltungsanordnung zu keinerlei Stromfluß über einen der Auslöser kommt.

Die erfindungsgemäße Lösung ist im Anspruch 1 gekennzeichnet. Danach wird der Auslöser über einen elektronischen Auslöseschalter betätigt, bei dem kein Schaltprellen auftreten kann. Die Ansteuerung dieses elektronischen Auslöseschalters übernimmt ein Logikteil. Die beiden Schalter wiederum steuern das Logikteil an und sind derart daran angeschlossen, daß dieses nur aktiviert wird, wenn beide Schalter geschlossen sind.

Eine solche Schaltungsanordnung ist auch gut geeignet für Schutzsysteme mit einer größeren Zahl von parallel geschalteten Auslösern. Die Schaltkontakte der beiden Schalter führen dabei im Auslösefall statt dem hohen Auslösestrom nur einen geringen Steuerstrom für das Logikteil.

Ein weiterer Vorteil des erfindungsgemäß verwendeten Logikteils ist die Möglichkeit, weitere Logikfunktionen darin zu integrieren. Ein Beispiel dafür sind Schutzsysteme, bei denen der Airbag abhängig von zwei verschiedenen Verzögerungswerten und von der Stellung von Zustandsschaltern ausgelöst wird, wobei die Stellung der Zustandsschalter davon abhängt, ob der Sitz besetzt ist und der Gurt angelegt ist.

Eine Erweiterung des Erfindungsgedankens ist die Verwendung zusätzlicher, in Serie geschalteter elektronischer Auslöseschalter für den jeweiligen Auslöser. Als elektronische Auslöseschalter werden z.B. VMOS-Transistoren verwendet, deren Ausfallwahrscheinlichkeit ohnedies sehr gering ist. Die Anordnung weiterer Auslöseschalter bringt zunächst eine Erhöhung der Ausfallwahrscheinlichkeit. Dieser Nachteil wird jedoch durch die dadurch gewonnene Testbarkeit überkompensiert. Bei Vorhandensein mehrerer Auslöseschalter können diese nämlich einzeln getestet, d.h. durchgeschaltet werden, ohne daß eine Auslösung des Airbags erfolgt. Durch periodisch wiederholte Tests wird ein defekt gewordener Auslöseschalter beim nächstfolgenden Test erkannt und der Fahrer gewarnt.

Ein unvorhersehbares Versagen ist also nur in der Zeitspanne zwischen dem Ausfallzeitpunkt eines Auslöseschalters und dem nächsten Test möglich, was bei kurzen Testabständen beliebig unwahrscheinlich ist.

Die Erfindung wird anhand der Figuren näher erläutert. Dabei zeigen:

FIG 1 ein Prinzipschaltbild für eine Schaltungsanordnung für ein Airbag-System gemäß dem Stand der Technik,

FIG 2 ein Prinzipschaltbild einer erfindungsgemäßen Schaltungsanordnung,

FIG 3 ein Prinzipschaltbild für eine Schaltungsanordnung mit mehreren Auslöseschaltern und

FIG 4 ein Ausführungsbeispiel für ein erfindungsgemäßes Logikteil.

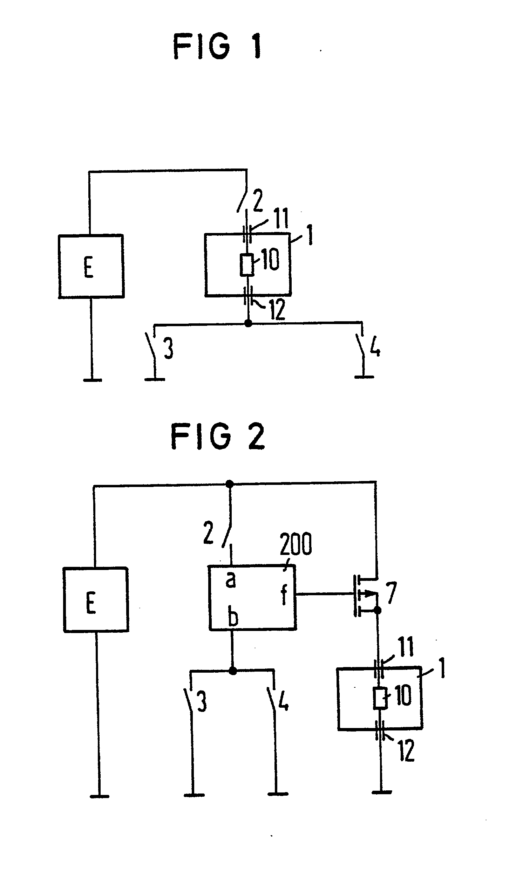

In FIG 1 ist ein Auslöser 10 in Form einer elektrisch zündbaren chemischen Zündpille über einen
Schalter 2 plusseitig und über parallele Schalter 3
und 4 masseseitig mit einer Energiequelle E verbunden. Der Auslöser 10 sitzt in einem Airbag-Gehäuse
1 und in seiner Zu- und Ableitung ist beim jeweiligen
Durchgang durch die Airbag-Gehäusewand ein
Durchführungskondensator 11, 12 vorgesehen.

Die Schalter 2, 3 und 4 sind über jeweils einen mechanischen Verzögerungssensor gesteuert. Der
Auslöser 10 wird betätigt, wenn der Schalter 2 und
einer der Schalter 3, 4 durch den jeweiligen Verzögerungssensor geschlossen wird. Die Durchführungskondensatoren 11, 12 sind einseitig mit der
Masse des Airbag-Gehäuses 1 verbunden und dienen zum Ableiten hochfrequenter Einstreuungen
auf der Zu- bzw. Ableitung des Auslösers 10.

Ein Schaltprellen des Schalters 2 führt nicht zur
Auslösung, wenn nicht gleichzeitig einer der Schalter 3, 4 geschlossen ist. Dabei werden aber der
Durchführungskondensator 11 und über den Widerstand des Auslösers 10 der Durchführungskondensator 12 geladen. Damit fließt ein Ladestrom über
den Auslöser 10. Die Aufladung erfolgt außerdem
unsymmetrisch, bedingt durch den Wi derstand des
Auslösers 10. Dadurch kommt es nach dem Schaltprellen zu Umladevorgängen zwischen den beiden
Durchführungskondensatoren 11, 12, wodurch wieder Strom über den Auslöser 10 fließt. Eine Schädigung des Auslösers 10, insbesondere bei öfterem
Schaltprellen des Schalters 2, ist also nicht auszuschließen.

Die FIG 2 zeigt nun eine erfindungsgemäße
Schaltungsanordnung, bei der ein Schaltprellen des
Schalters 2 keine Rolle spielt. Der Auslöser 10 - wie
anhand von FIG 1 beschrieben - ist über einen Auslöseschalter 7 an die Energiequelle E angeschlossen. Mit dieser sind auch zwei Eingänge a, b eines
Logikteils 200 verbunden und zwar über den Schalter 2 und die Schalter 3 bzw. 4.

Der Auslöseschalter 7 ist ein VMOS-Transistor,
dessen Drain an der Versorgungsspannung und
dessen Source an dem Auslöser 10 angeschlossen
sind. Der VMOS-Transistor wird über sein Gate
von einem Ausgang f des Logikteils 200 angesteuert.

Die Schalter 2, 3 und 4 dienen also nur noch als
Steuerschalter für das Logikteil 200. Ist der Schalter 2 und einer der beiden Schalter 3, 4 geschlossen, so wird das Logikteil 200 über die Energiequelle E mit Steuerenergie versorgt und steuert über
den Ausgang f den VMOS-Transistor durch.

Ein Schaltprellen des Schalters 2 spielt keine Rolle mehr, da ohne einen zusätzlich geschlossenen
Schalter 3 oder 4 das Logikteil 200 nicht aktiviert
wird. Da es bei einem elektronischen Bauteil, wie einem VMOS-Transistor, kein Schaltprellen gibt, treten dadurch auch keine Läde- bzw. Umladevorgänge an den Durchführungskondensatoren 11 bzw. 12
mehr auf.

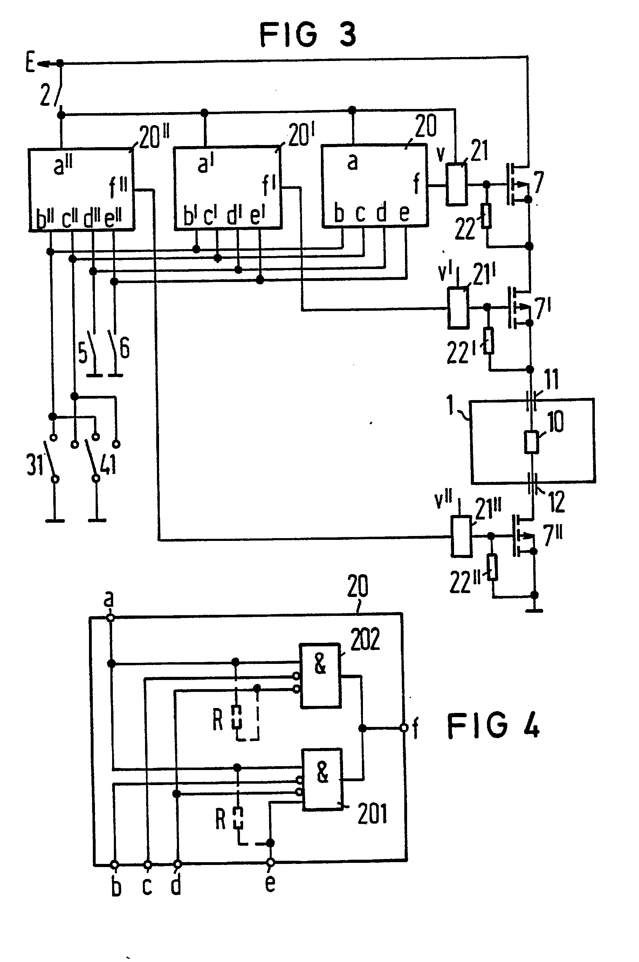

In FIG 3 ist der Auslöser 10 wieder zusammen mit
dem Airbag-Gehäuse 1 und den Durchführungskondensatoren 11 und 12 gezeigt; er ist über drei Auslöseschalter 7, 7', 7" an die Energiequelle E angeschlossen; dabei liegt ein Auslöseschalter 7" zwischen Auslöser 10 und Masse.

Die Auslöseschalter 7, 7', 7" werden über zugehörige identische Logikteile 20, 20', 20" und Stromquellen 21, 21' und 21"angesteuert. Die Stromquellen
20, 20', 20" erhalten eine Versorgungsspannung
über Versorgungseingänge v, v', v", die jeweils
über den Schalter 2 mit der Energiequelle E verbunden sind. Außerdem ist über die Gate-Source-
Strecke jedes VMOS-Transistors ein Widerstand
22, 22' und 22" geschaltet.

Der Aufbau und die Wirkungsweise wird anhand
des Logikteils 20 dargestellt. Dieses hat Eingänge
a, b, c, d, e und einen Ausgang f. Der Eingang a ist
über den Schalter 2 mit der Energiequelle E verbunden. Der Eingang b ist an einen ersten Schaltkontakt von Doppelschaltern 31 und 41 gelegt und der
Eingang c an einen zweiten Schaltkontakt der Doppelschalter 31 und 41. Beim Schließen eines der Doppelschalter 31 und 41 auf einen der beiden Schaltkontakte werden diese mit Masse verbunden. Der
Eingang d ist über einen Sitzschalter 5 und der Eingang e über einen Gurtschalter 6 mit Masse verbunden, wenn der Sitz belegt bzw. der Gurt angelegt ist.

Bei diesem Ausführungsbeispiel ersetzen die
Doppelschalter 31 und 41 die Schalter 3 und 4. Sie
sind ebenfalls von einem nicht dargestellten Verzögerungssensor betätigt, der sie bei einem Ansprechfall 1 - der Verzögerungswert liegt zwischen
einem ersten und einem zweiten, größeren Grenzwert -, auf den Schaltkontakt steuert, der dem Eingang b zugeordnet ist. Bei einem Ansprechfall 2 -
der Verzögerungswert ist gleich oder größer als
der zweite Grenzwert - steuert der Verzögerungssensor die Doppelschalter 31 und 41 auf den zweiten Schaltkontakt, der dem Eingang c zugeordnet
ist.

Im Logikteil 20 sind die logischen Verknüpfungen
für die Schalterinformationen an den Eingängen a
bis e untergebracht. Ein Ausführungsbeispiel für
ein solches Logikteil 20 ist in FIG 4 gezeigt. Das Logikteil 20 enthält zwei UND-Glieder 201 und 202. Die
Ausgänge der beiden UND-Glieder sind zusammengeführt und gemeinsam an einen Ausgang f geschaltet. Die Auslösung soll er folgen, wenn an einem der
beiden Ausgänge der UND-Glieder 201 bzw. 202 eine logische "1" erscheint. Das UND-Glied 201 ist
für den Ansprechfall 1 und das UND-Glied 202 für
den Ansprechfall 2 vorgesehen. Die vier Eingänge
des UND-Glieds 201 sind mit den Eingängen a, b, d
und e des Logikteils 20 verbunden. Die den Eingängen b und d zugeordneten Eingänge des UND-
Glieds 201 sind negiert. Die drei Eingänge des UND-
Glieds 202 sind mit den Eingängen a, c und d des Logikteils 20 verbunden. Hier sind die den Eingängen
c und d zugeordneten Eingänge negiert. Die in FIG
4 gestrichelt eingezeichneten Widerstände R sorgen bei offenen Schaltern an den Eingängen d, e und damit an den zugeordneten Eingängen der UND-Glieder 201, 202 für definierte "1"-Signale.

Im Ansprechfall 1 schließt der jeweilige Verzögerungssensor den Schalter 2 und mindestens einen der Doppelschalter 31, 41 auf deren ersten Schaltkontakt, der mit dem Eingang b des Logikteils 20 verbunden ist. Das UND-Glied 201 erzeugt jedoch erst dann eine logische "1" am Ausgang, wenn zusätzlich der Sitzschalter 5 geschlossen ist und der Gurtschalter 6 offen. Daher wird der zugehörige Airbag weder bei nicht besetztem Sitz noch bei angelegtem Gurt ausgelöst. Im Ansprechfall 1 ist nämlich der angelegte Gurt allein als Schutz ausreichend.

Im Ansprechfall 2 schließt der jeweilige Verzögerungssensor den Schalter 2 und mindestens einen der Doppelschalter 31, 41 auf deren zweiten Schaltkontakt, der mit dem Eingang c des Logikteils 20 verbunden ist. Das UND-Glied 202 erzeugt dann eine logische "1" am Ausgang, wenn zusätzlich der Sitzschalter 5 geschlossen ist. Die Stellung des Gurtschalters 6 spielt hierbei keine Rolle, da im Ansprechfall 2 der Airbag auch bei angelegtem Gurt ausgelöst werden muß.

Im Auslösefall erscheint am Ausgang f des Logikteils 20 ein Auslösesignal. Dieses Auslösesignal wird gemäß FIG 3 der Stromquelle 21 zugeführt, die daraufhin einen Strom auf das Gate des VMOS-Transistors schaltet, der als Auslöseschalter 7 dient. Dieser Strom fließt außerdem über den Widerstand 22, der zwi schen Gate und Source des VMOS-Transistors geschaltet ist und erzeugt über diesen einen Spannungsabfall, der die Drain-Source-Strecke des VMOS-Transistors sicher durchschaltet.

Die Eingänge a' bis e' bzw. a" bis e" der Logikteile 20', 20" sind in gleicher Weise beschaltet wie die des Logikteils 20.

Die drei VMOS-Transistoren, die als Auslöseschalter 7, 7', 7" dienen, werden periodisch getestet, indem sie einzeln durchgeschaltet werden. Durch die Anordnung dreier VMOS-Transistoren bleibt beim Testen das Zweifehlerkriterium erfüllt, da für eine Fehlauslösung zwei weitere VMOS-Transistoren fälschlicherweise durchschalten müßten. Die Ansteuerung für den Test übernimmt ein nicht dargestellter Mikroprozessor, der für diverse Überwachungsaufgaben sowieso vorhanden ist. Der Mikroprozessor steuert dazu zwei ebenfalls nicht dargestellte Überbrückungsschalter an, die den Schalter 2 und einen der Doppelschalter 31, 41 überbrücken, so daß die gesamte Schaltung in den Test einbezogen ist. Der Test unterscheidet sich vom wirklichen Auslösefall dann nur dadurch, daß der Mikroprozessor jeweils zwei der drei Ausgänge f, f', f" der Logikteile 20, 20', 20" sperrt. Bei jedem Testzyklus wird so einzeln jeder VMOS-Transistor angesteuert und gemessen, ob er dabei durchschaltet. Dieser Testzyklus wird in bestimmten Zeitabständen periodisch wiederholt.

Die Prinzipschaltbilder gemäß FIG 3 und 4 stellen nur ein Schaltbeispiel für ein erfindungsgemäßes Logikteil 20, 20', 20" dar. Statt je eines getrennten Logikteils 20, 20', 20" für jeden Auslöseschalter 7, 7', 7" können auch Teile davon gemeinsam verwendet werden oder auch nur ein Logikteil 20, 20', 20" mit entsprechend drei Ausgängen f, f', f" vorgesehen sein.

Für den Aufbau eines Logikteils 20, 20', 20" kommen alle möglichen elektrischen oder elektronischen Bauteile in Frage, wie z.B. ein Schaltnetzwerk aus Transistoren und Widerständen. Ebenso kann diese Aufgabe ein programmierter Mikrocomputer mit entsprechender Peripherie übernehmen.

**Patentansprüche**

1. Schaltungsanordnung zum Betätigen eines Schutzsystems, insbesondere eines Airbag-Systems,
- mit einer Energiequelle (E) für mindestens einen Lastkreis mit einem Auslöser (10) für das Schutzsystem,
- mit je einem Durchführungskondensator (11, 12) in der Zu- und Ableitung des Auslösers (10),
- mit mindestens zwei, zueinander in Serie geschalteten, von je einem mechanischen Verzögerungssensor gesteuerten, Schaltern (2, 3, 4), dadurch gekennzeichnet,
daß die Schalter (2, 3, 4) ein Logikteil (200, 20, 20', 20") mit der Energiequelle (E) verbinden und daß der Lastkreis einen elektronischen Auslöseschalter (7, 7', 7") für den Auslöser (10) enthält, den das Logikteil (200, 20, 20', 20") ansteuert.

2. Schaltungsanordnung nach Anspruch 1, dadurch gekennzeichnet, daß das Logikteil (200, 20, 20', 20") den Auslöseschalter (7, 7', 7") abhängig von den Schaltstellungen der Schalter (2, 3, 4) und den Schaltstellung mindestens eines Zustandsschalters ansteuert.

3. Schaltungsanordnung nach Anspruch 1 und 2, dadurch gekennzeichnet, daß zu dem Auslöseschalter (7, 7', 7") mindestens ein zweiter Auslöseschalter (7, 7', 7") in Reihe geschaltet ist.

**Claims**

1. Circuit arrangement for actuating a safety system, in particular an airbag system, having an energy source (E) for at least one load circuit with a trigger (10) for the safety system, having in each case one feed-through capacitor (11, 12) on the lead-in and lead-out of the trigger (10), having at least two switches (2, 3, 4), connected in series to one another and controlled by one mechanical delay sensor each, characterized in that switches (2, 3, 4) connect a logic component (200, 20, 20',20") to the energy source (E) and in that the load circuit contains an electronic trigger switch (7, 7', 7") for the trigger (10) which the logic component (200, 20, 20', 20") drives.

2. Circuit arrangement according to Claim 1, characterized in that the logic component (200, 20, 20', 20") drives the trigger switch (7, 7', 7"), dependent on the switch settings of the switches (2, 3, 4) and the switch settings of at least one status switch.

3. Circuit arrangement according to Claim 1 and 2, characterized in that at least a second trigger switch (7, 7', 7") is connected in series to the trigger switch (7, 7', 7").

## Revendications

1. Montage pour actionner un système de protection, notamment un système à coussins pneumatiques, comportant
   - une source d'énergie (E) pour au moins un circuit de charge comprenant un déclencheur (10) pour le système de protection,
   - un condensateur respectif de traversée (11, 12) placé dans la ligne d'arrivée et dans la ligne de départ du déclencheur (10),
   - au moins deux interrupteurs (2, 3, 4) branchés en série l'un avec l'autre et commandés chacun par un capteur mécanique de décélération,
   caractérisé par le fait que les interrupteurs (2, 3, 4) relient une partie logique (200, 20, 20', 20") à la source d'énergie (E), et que le circuit de charge contient, pour le déclencheur (10), un interrupteur électronique de déclenchement (7, 7', 7"), qui commande la partie logique (200, 20, 20', 20").

2. Montage suivant la revendication 1, caractérisé par le fait que la partie logique (200, 20, 20', 20") commande l'interrupteur de déclenchement (7, 7', 7") en fonction des positions de commutation des interrupteurs (2, 3, 4) et des positions de commutation d'au moins un interrupteur d'état.

3. Montage suivant les revendications 1 et 2, caractérisé par le fait qu'en série avec l'interrupteur de déclenchement (7, 7', 7") est branché au moins un second interrupteur de déclenchement (7, 7', 7").

# FIG 1

# FIG 2

# FIG 3

# FIG 4